Europäisches Patentamt

European Patent Office

Office européen des brevets

(11) Publication number: **0 504 815 A1**

# EUROPEAN PATENT APPLICATION

(21) Application number: **92104608.2**

(22) Date of filing: **17.03.92**

(51) Int. Cl.5: **H01M 4/68**, H01M 4/74

(30) Priority: **18.03.91 JP 52101/91**

(43) Date of publication of application:
**23.09.92 Bulletin 92/39**

(84) Designated Contracting States:
**DE FR GB NL**

(71) Applicant: **MATSUSHITA ELECTRIC INDUSTRIAL CO., LTD**
**1006, Oaza Kadoma, Kadoma-shi**
**Osaka 571(JP)**

(72) Inventor: **Takahashi, Katsuhiro**
**38-1, Hashiraichibancho**
**Toyohashi-shi(JP)**
Inventor: **Yasuda, Hiroshi**
**158-4, Yaroku**
**Imurecho, Toyohashi-shi(JP)**
Inventor: **Hoshihara, Naoto**
**2680, Nakanogo, Araicho**
**Hamana-gun, Shizuoka-ken(JP)**

(74) Representative: **Patentanwälte Leinweber & Zimmermann**
**Rosental 7/II Aufg.**
**W-8000 München 2(DE)**

(54) **Sealed lead-acid secondary battery.**

(57) In order to establish the functions of a closed type lead-acid secondary battery, a sealed type secondary battery, the present invention intends to achieve a combination of keeping a state of requiring no maintenance, a so called maintenance free feature, by controlling the amount of hydrogen evolved in a small acceptable range and of improving a charge recoverability after discharging at a fine electric current or overdischarging, or after overdischarging followed by leaving to stand for a while which are often encountered with the sealed battery. The improvement of the charge recoverability after discharging followed by leaving to stand can be achieved by allowing almost all the requisite electrolyte, except a very small amount of free liquid, to be absorbed in positive and negative electrodes and absorptive separators and by providing a coating layer of a lead-antimony based alloy on a portion of or all the surfaces of network positive electrodes made of a lead-calcium based alloy.

## BACKGROUND OF THE INVENTION

### Field of the Invention

The present invention relates to a sealed lead-acid secondary battery of a so called "oxygen recombination type" where an oxygen gas evolved at a positive electrode is removed by sorption in a negative electrode region to keep tightness of the battery.

### Description of Related Art

Recently, this type of sealed lead-acid secondary battery has been widely used in industrial applications such as power supplies for general automobiles, electric motorcars for golf course, robots, conveyers, and urgent power sources as well as in power sources for minaturized apparatuses for the reasons that evolved gases and acid electrolyte mist are completely sealed in the battery without causing any damages in associated devices, and that no care needs to be taken to ensure prevention of a loss of the electrolyte, thereby requiring no maintenance. In other words, such batteries are excellent in that they have a maintenance free feature.

Most of these batteries are of the oxygen recombination type, i.e., sealed lead-acid secondary batteries, having an arrangement where fundamentally, almost all the diluted sulfuric acid electrolyte is absorbed into positive and negative electrodes and mat-like separators made of fine glass fibers or plastic fibers, no or little free liquid electrolyte exists in the battery structures, and the oxygen gas evolved at the positive electrodes during charging is removed by sorption into the negative electrode so as to reduce the gas into water, thereby avoiding a loss of the electrolyte in the batteries in use, though there may be more or less any modification in the arrangements, .

These batteries have a basic drawback that there is no means for removing hydrogen gas when they become in such a state as the hydrogen gas being evolved during charging, so that the air tight mechanism of the batteries can not be maintained. Thus, there has been generally employed a structure comprising networks of positive and negative electrodes containing no antimony which has a lower hydrogen overvoltage, in other word, is apt to generate hydrogen gas.

Especially taking account of strength and producibility of the grid, a lead-calcium alloy derived from a lead-calcium-tin alloy has often been used in recent years as grid alloy and into networks of casting grid or sheets which may be processed into the form of expanded networks to be ready for use.

In any case, these antimony free grid, particularly when used in the sealed type batteries, have encountered the difficulties that such batteries have poor recoverability to their normal charged level after overdischarging, or after overdischarging followed by leaving to stand for a while.

The poor recoverability in the sealed batteries as above may also be caused by continuous discharge at a fine electric current. Such overdischarging and discharging at a fine electric current occur inevitably when the batteries are actually set in practical apparatuses and left to stand.

In the prior art liquid type batteries containing an abundant amount of electrolyte, an improvement in the charge recoverability after overdischarging has been achieved by increasing the amount of tin in the grid alloys. However, such expedient is insufficient to repair the loss of charge recoverability due to degradation occurring when the sealed batteries are continuously discharged at a fine electric current.

In the sealed lead-acid secondary batteries of the oxygen recombination type, the phenomena as above are attributed to the presence of a smaller amount of the electrolyte containing sulfuric acid in the cells as compared with that in the ordinary liquid electrolyte cells, because the oxygen recombination type batteries contain such a limited amount of electrolyte as almost all the electrolyte, except a very small amount of free liquid, being absorbed into the positive and the negative electrodes as well as the separators.

Thus, it has been manifested that while the discharge is effected at a fine electric current in the electrolyte having a reduced concentration of sulfuric acid owing to consumption of some sulfuric acid therein under discharging, an active material for the positive electrodes, lead dioxide, remains allowing the network of the grid to polarize at a high potential, thereby causing formation of specific passive layers on the surfaces of the network positive electrodes, which layers have obstacles for the electrodes to subsequently receive a quantity of charging electricity.

Therefore, there is a need to develop a technique which can overcome the remaining problems, that is, the basic problems encountered in establishment of functions of the sealed batteries as above that the amount of hydrogen gas evolved is suppressed in an actually acceptable small range to retain the so called maintenance free feature and at the same time the charge recoverability after overdischarging, or after overdischarging followed by leaving to stand for a while, or after the continuous discharge at a fine electric current which are apt to occur in the sealed batteries is improved.

## SUMMERY OF THE INVENTION

A primary object of the present invention is to overcome the problems as described above.

A practical method of overcoming the problems is to provide a sealed lead-acid secondary battery having almost all the requisite electrolyte, except a very small amount of free liquid, absorbed in positive and negative electrodes and absorptive separators characterized by providing a coating layer of a lead-antimony based alloy on a portion of or all the surfaces of network positive grid made of a lead-calcium based alloy.

It is natural to primarily employ networks of the grid containing no antimony for the negative electrodes, though the presence of antimony on the negative electrodes partly owing to precipitation of eluted antimony from the positive electrodes or deliberate incorporation of antimony for some reasons may accepted insofar as the amount of the antimony is insufficient to increase significantly generation of hydrogen at the negative electrodes.

## BRIEF DESCRIPTION OF THE DRAWINGS

FIGURE 1 shows plots of the charge recoverability of the batteries of the present Examples after overdischarging at a fine electric current followed by leaving to stand for a while as a function of the concentration of antimony in the coating on the surfaces of the networks, and

FIGURE 2 shows a plot of the mount of generated hydrogen vs. the ratio by weight of antimony to positive active material in the electrode networks of the grid to the active material for the positive electrodes.

## DESCRIPTION OF PREFERRED EMBODIMENTS

The conception of the constitution as described above according to the present invention have resulted from the discovery that the aforementioned passivating phenomenon occurs very closely to the surfaces of the grid network of positive electrodes and that the phenomenon can be avoided by providing an antimony alloy layer on the surfaces of said positive networks.

Generally, in order to suppress the passivating phenomenon, the concentration of antimony on the surfaces of the grid networks itself should be preferably in excess of 1 % by weight.

The constitution of the present invention has advantages that a higher concentration of antimony on the surfaces can be achieved by controlling a total amount of antimony which is confined in an extremely limited layer on the surfaces of the networks without extremely increasing the concentration of antimony in the alloy composition of the whole networks.

The layer can effectively function with a thickness substantially on the order of 1/100 the cross-sectional thickness of the bulk of network, or even with an actual thickness on the order of several micrometers, so that a higher concentration of antimony present on the surfaces of the networks such as over 5 % by weight may be used with a higher effectiveness realizing suppression of the overall antimony concentration to 1/100 of the used concentration as expressed on the basis of the whole alloy networks. Too high concentration of antimony results in harder surfaces of the networks having poor processability. Therefore, the concentration of antimony should be preferably in the range of 1 % by weight to 5 % by weight in practice.

Possibility of the limitation of the absolute amount of antimony in spite of achieving a higher concentration of antimony on the surfaces of the networks is an extremely important advantage for the sealed batteries in that when the absolute amount of antimony is small to some extent, the dissolved antimony into the electrolyte is immobilized by adsorption on the active material of the positive electrodes so as to be scarcely deposited on the negative electrodes, and therefore, the maintenance free feature of the batteries is never impaired. Thus, a combination of the suppression of the network passivation with the maintenance free feature can be established.

In view of the forgoing, the limitation of the ratio by weight of antimony to the total amount of the active material of the positive electrodes to 0.2 % by weight or less allows such a maintenance free feature as that of the prior art battery having no surface layer of antimony substantially without causing any significant difference therebetween as well as any confusion.

Furthermore, the present inventors have developed a method of alleviating the aforementioned problems by increasing the content of tin in the bulk or the surfaces of the network of positive electrodes. The method is effectively capable of not only suppressing the passivation as discussed above which may otherwise occur in the sealed batteries owing the discharge at a fine electric current, but also achieving an improvement in the charge recoverability during and after discharging in addition to the suppression.

The use of tin alone for overcoming the above problems requires a significantly high amount of tin to be added which may cause economical problems.

The use of a combination of tin and antimony is accepted in the present invention to achieve a good effect, and the amount of tin to be added is not critical. The concentration of tin in the surface layer should be practically in the range of about 1 % by weight to about 10 % by weight apart from the cost factor.

The present invention will be illustrated with reference to the following Examples to make clear its characteristics and effects.

Grid networks for the positive electrodes to be used in the sealed lead-acid secondary batteries according to the present invention were manufactured as follows: A slab of a lead-calcium-tin alloy containing 0.08 % by weight Ca and 0.5 % by weight Sn and having a thickness of 10 mm was laminated with a foil of a lead-antimony alloy having a thickness of 0.2 mm and then the laminate was cold rolled into a sheet having a thickness of 1.0 mm. In this way, there were prepared nine sorts of antimony alloy foils having a concentration of 0, 5, 1, 2, 3, 4, 5, 6, 8, and 10 % by weight. These foils were expanded to produce networks to be used in the present invention.

These nine sorts of networks were employed as positive electrodes while the networks produced with the lead-calcium-tin alloy were employed as negative electrodes. Sealed lead-acid secondary batteries having a nominal voltage of 12 V and a capacity of 30 Ah were manufactured with mat separators made of fine glass fibers.

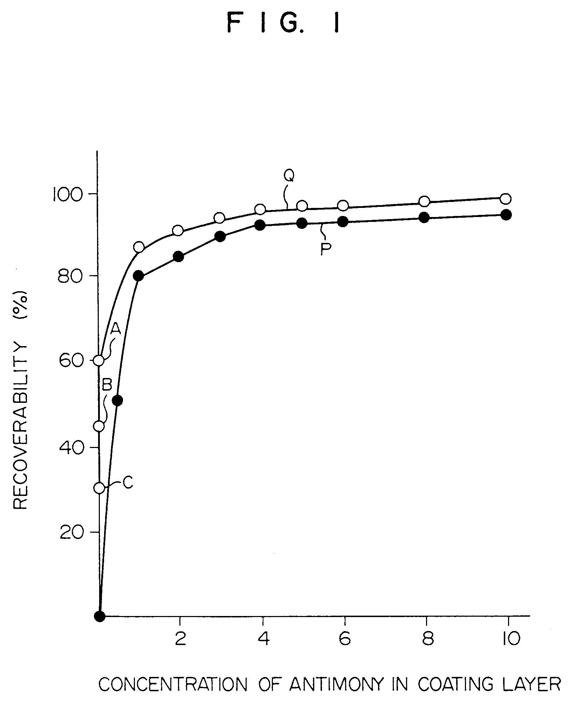

The batteries were manufactured with electrode plates having the same configuration and weight to have the same battery arrangement. These nine sorts of batteries were discharged at a temperature of 40 °C at a fine electric current of 20 mA for a long time of 5 months and then charged at a constant voltage of 15.0 in for 5 hours to evaluate their charge recoverability. The results are shown at P in FIGURE 1. It can be seen from FIGURE 1 that a concentration of antimony of 1 % by weight or more in the lead-antimony foils has a remarkable effect in improvement of the charge recoverability after overdischarging and that over 6 % by weight, no further improvement is achieved.

The above results are somewhat higher than those with no addition of tin to the surfaces of the networks. FIGURE 1 Q shows the results obtained by adding 5 % by weight tin with varying amounts of antimony to be added. The results reveals that synergetic effects of the addition of 5 % by weight tin alone with the addition of antimony to the surface layer according to the present invention were achieved.

The results of referential examples designated by B and C, the former containing 3 % by weight tin and the latter containing 1 % by weight tin without any antimony are also shown in FIGURE 1. It can be said from the results that for this type of passive state, the surface layer containing antimony has a more remarkable effect.

Next, in order to study the effect of the antimony present in the batteries on the generation of hydrogen, similar sample batteries were manufactured by the same procedure as above with varying total amounts of antimony obtained by varying the thickness of the layer of the lead-antimony alloy containing 5 % by weight antimony.

These batteries were repeatedly charged and discharged 20 times at a rate of 5 hours and then the completely charged batteries were further charged at a 14.5 V for 5 hours, during which the amount of evolved hydrogen was measured.

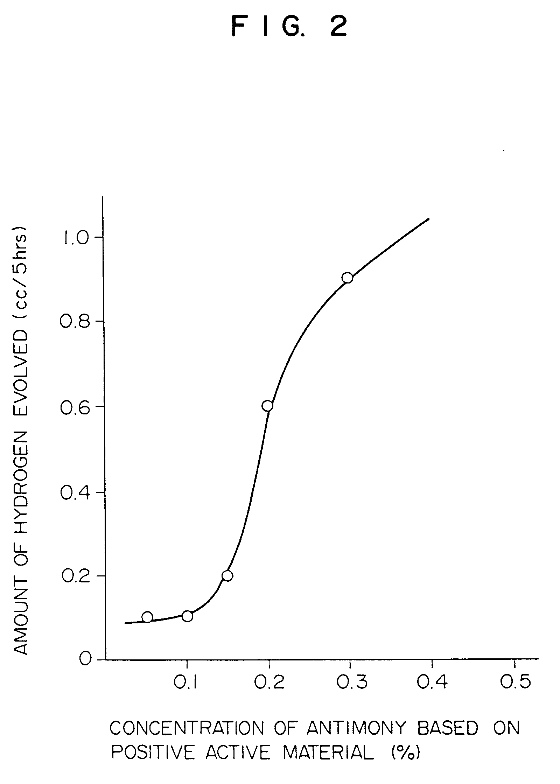

FIGURE 2 shows the results. This FIGURE shows the relationship between the ratio of the amount of antimony to the mass of the active material and the self-discharging amount which indicates that over 0.2 % by weight tends to increase the generation of hydrogen. It can be known, therefore that the amount of antimony of 0.2 % by weight or less relative to the active material for the positive electrodes allows the concentration of antimony in the surface layer to increase without inhibiting the functions of the sealed lead-acid secondary batteries by avoiding a drastic increase in the generation of hydrogen.

As discussed above, the present invention enables a combination of the improvement of the recoverability after overdischarging followed by leaving to stand, especially discharged at a fine electric current with the suppression of the hydrogen evolution, i.e., the maintenance free feature as a basic requirement of the sealed batteries. Therefore, the present invention is extremely valuable in industry.

## Claims

1. A sealed lead-acid secondary battery with almost all the requisite electrolyte being absorbed in positive and negative electrodes and absorptive separators, in which said positive electrodes comprise networks of a lead-calcium based grid alloy having a coating layer of a lead-antimony alloy on a portion or all the surfaces of the networks of grid.

2. The sealed lead-acid secondary battery according to Claim 1, in which said coating layer comprises the lead-antimony based alloy having a concentration of antimony of 1 to 5 % by weight.

3. The sealed lead-acid secondary battery according to Claim 1 or 2, in which the total amount of antimony present in said coating layer is 0.2 % by weight or less relative to the active material for the positive electrodes.

# F I G. I

CONCENTRATION OF ANTIMONY IN COATING LAYER

# F I G. 2

AMOUNT OF HYDROGEN EVOLVED (cc/5hrs)

CONCENTRATION OF ANTIMONY BASED ON POSITIVE ACTIVE MATERIAL (%)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 252 189 (MATSUSHITA ELECTRIC IND. CO.) * claims 1-13 * | 1-3 | H01M4/68 H01M4/74 |
| X | US-A-4 906 540 (N. HOSHIHARA ET AL.) * claims 1-6 * | 1-3 | |
| X | WO-A-8 603 343 (REVERE COPPER AND BRASS INC.) * claims 1-11 * | 1-3 | |
| A | FR-A-2 342 562 (AKTIEBOLAGET TUDOR) * claims 1-11 * | 1-3 | |
| A | EP-A-0 213 203 (MATSUSHITA ELECTRIC INDUSTRIAL CO. LTD.) * claims 1-9 * | 1-3 | |

TECHNICAL FIELDS SEARCHED (Int. Cl.5 )

H01M

The present search report has been drawn up for all claims

| Place of search | Date of completion of the search | Examiner |
|---|---|---|
| THE HAGUE | 25 JUNE 1992 | BATTISTIG M.L.A. |

EPO FORM 1503 03.82 (P0401)